Europäisches Patentamt

European Patent Office

Office européen des brevets

(11) Numéro de publication : **0 076 712**
**B1**

(12) FASCICULE DE BREVET EUROPÉEN

(45) Date de publication du fascicule du brevet :
05.06.85

(51) Int. Cl.⁴ : **A 47 J 43/046, A 47 J 42/56**

(21) Numéro de dépôt : 82401597.8

(22) Date de dépôt : 30.08.82

(54) Machine de travail pour la préparation d'aliments et autres produits, en particulier pour hacher et mélanger.

(30) Priorité : 02.10.81 FR 8118607

(43) Date de publication de la demande :
13.04.83 Bulletin 83/15

(45) Mention de la délivrance du brevet :
05.06.85 Bulletin 85/23

(84) Etats contractants désignés :
AT BE CH DE GB IT LI LU NL SE

(56) Documents cités :
EP-A- 0 024 992
FR-A- 1 444 849
FR-A- 2 147-361
FR-A- 2 167 937
FR-A- 2 359 689
FR-A- 2 431 275
US-A- 2 265 658
US-A- 3 373 975
US-A- 3 434 518
US-A- 4 199 268

(73) Titulaire : **DITO-SAMA**
39 rue de Beauze
F-23200 Aubusson Creuse (FR)

(72) Inventeur : **Bos, Pierre Henri**
**rue Corot**
**F-23200 Aubusson, Creuse (FR)**
Inventeur : **Musseau, Joel René**
**Passage Sarrazin**
**F-23200 Aubusson, Creuse (FR)**
Inventeur : **Richard, Jean Pierre**
**20 rue Jean Moulin**
**F-23200 Aubusson, Creuse (FR)**

(74) Mandataire : **Madeuf, René Louis et al**
**Cabinet Madeuf 3, Avenue Bugeaud**
**F-75116 Paris (FR)**

## Description

La présente invention concerne une machine pour le travail des aliments qui permet, en particulier, de hacher des aliments crus ou cuits notamment de la viande et des légumes et aussi d'effectuer des mélanges, des broyages, des pétrissages de pâte ou encore d'exécuter des préparations diverses telles que des émulsions notamment les mayonnaises, etc. Elle s'applique aussi à d'autres produits, notamment à des préparations chimiques.

La technique a déjà fait connaître de nombreux appareils de cette nature, en particulier des appareils destinés à la préparation d'aliments dans des collectivités, appareils qui comportent un groupe moteur pour l'entraînement de couteaux rotatifs qui sont disposés dans une cuve pouvant être démontée pour permettre son lavage.

En particulier, le brevet EP-A-0 024 992 montre une machine du type mentionné ci-dessus comportant des moyens pour la détection de la présence et de la position de la cuve commandant l'élément d'arrêt du moteur de la machine mais, par des moyens différents lesquels, en particulier, ne permettent pas un entretien correct de la machine du fait d'une transmission complexe placée le long d'une génératrice de la cuve.

L'invention concerne des perfectionnements qui sont apportés aux appareils du genre rappelé ci-dessus, ces perfectionnements ayant pour effet de rendre plus facile l'utilisation desdites machines et ayant aussi pour effet de les rendre plus sûres ; il est en effet important que des utilisateurs, même peu attentifs, ne puissent en aucun cas être blessés par une mise en fonctionnement intempestive de la machine, en particulier lors du montage et du démontage des couteaux ainsi que lors de la mise en place et du retrait de la cuve de travail et du couvercle de celle-ci.

Conformément à l'invention, la machine de travail pour la préparation d'aliments et d'autres produits en particulier pour hacher et mélanger, comprenant un ensemble moteur d'entraînement de couteaux disposés de façon amovible dans une cuve amovible également, cette cuve étant munie d'au moins un doigt coopérant avec au moins un élément d'arrêt imposant une position déterminée de la cuve par rapport au socle, un mécanisme détecteur de présence réagissant selon que la cuve occupe ou non ladite position déterminée par rapport au socle, la cuve étant fermée par un couvercle amovible comportant une collerette périphérique adjacente à un rebord tombé, ce dernier coopérant avec le bord supérieur de la cuve, un organe assurant la liaison entre la cuve et le couvercle, un détecteur de position étant prévu, réagissant selon que le couvercle occupe ou non une position déterminée par rapport à la cuve, détecteur de présence et détecteur de position agissant en série de sorte que des défauts de position de la cuve et des défauts de position du couvercle empêchent le fonctionnement de l'ensemble moteur est caractérisée en ce que l'organe assurant la liaison entre la cuve et le couvercle est constitué par une couronne de verrouillage formant un élément séparé du couvercle et de la cuve, ladite couronne comportant un détecteur de position prenant, pour assurer le verrouillage, d'une part sur la collerette périphérique du couvercle et d'autre part sur des éléments solidaires de la cuve, la collerette comportant en outre des éléments de retenue empêchant tout mouvement axial dudit couvercle tout en laissant libre ledit couvercle de tourner.

Diverses autres caractéristiques de l'invention ressortent d'ailleurs de la description détaillée qui suit.

Une forme de réalisation de l'invention est représentée, à titre d'exemple non limitatif, aux dessins annexés.

La figure 1 est une coupe-élévation schématique de la machine de travail pour aliments, objet de l'invention.

La figure 2 est une élévation illustrant une caractéristique particulière concernant deux des pièces apparaissant à la fig. 1.

La figure 3 est une coupe à plus grande échelle vue suivant la ligne III-III de la fig. 1.

La figure 4 est une demi-coupe élévation partielle illustrant un détail de réalisation.

La figure 5 est une vue de dessus partielle.

La figure 6 est une coupe-élévation partielle à grande échelle d'un détail apparaissant à la fig. 1.

La figure 7 est une coupe-élévation analogue à la fig. 6 illustrant une variante.

La machine représentée aux dessins comporte un socle 1 qui forme, sur un côté, un carter 2 contenant un ensemble moteur 3 dont l'arbre de sortie 4 entraîne, par exemple au moyen d'une courroie 5 et d'une poulie 6, un arbre mené 7 monté dans des paliers 8. Les paliers 8 reposent sur une platine 9 sur laquelle est fixée l'embase 10a d'une douille 10. La fixation de l'embase 10a est assurée, par exemple, au moyen de vis 11 qui servent également à la fixation d'un plateau 12 dont la fonction est décrite dans ce qui suit.

L'arbre mené 7 est guidé à l'intérieur de la douille 10 et fait saillie en 7a au-dessus de cette douille. Une bague d'étanchéité 13 est prévue à la partie supérieure de la douille 10 et entoure l'arbre 7.

La paroi externe de la douille 10 est cylindrique ou légèrement conique pour être engagée à frottement doux à l'intérieur d'un puits 14 formé à partir du fond 15 d'une cuve 16.

Le dessin montre que la cuve 16 est avantageusement en métal relativement mince, par exemple en acier inoxydable.

Le fond de la cuve 15 est de préférence légèrement conique comme cela est représenté et il comporte sur son dessous un doigt 17 entrant dans une encoche 18 du plateau 12. De cette manière, la cuve est empêchée de tourner par rapport au socle 1 et ne peut occuper qu'une seule position.

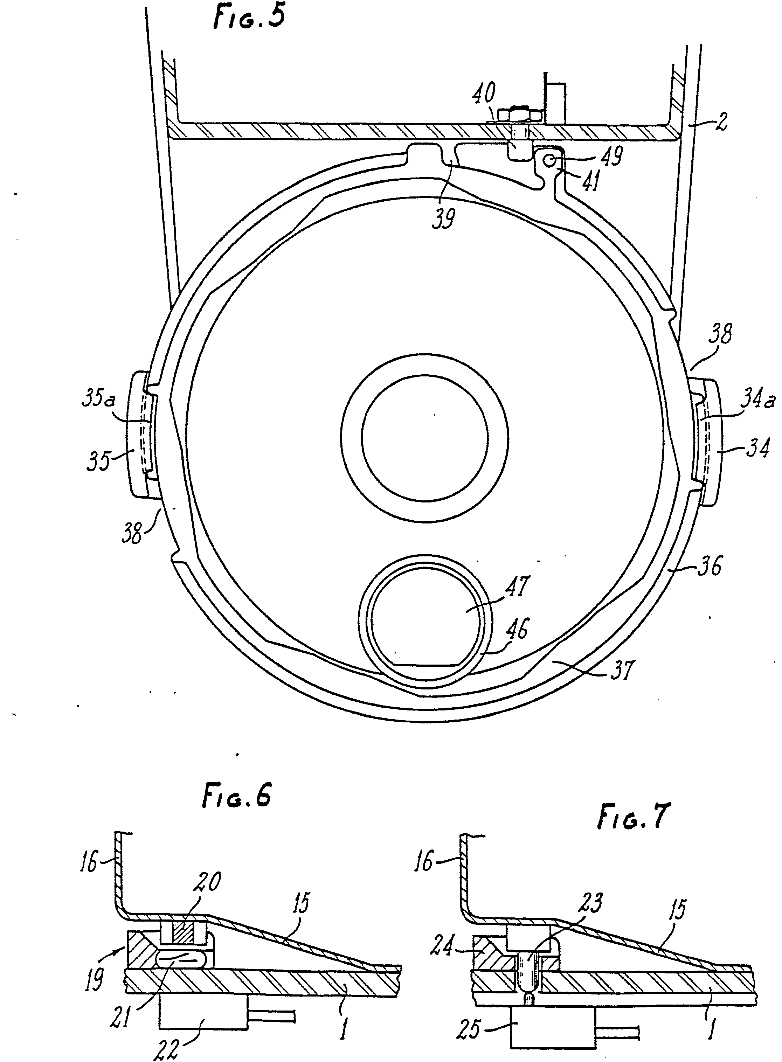

Comme le montre la fig. 6, il est prévu un mécanisme détecteur 19, dit encore détecteur de présence, entre le socle 1 et la cuve 16. Ce détecteur de présence peut être réalisé de nombreuses façons dans la technique.

A la fig. 6, le détecteur de présence comporte un aimant 20 et un commutateur 21, par exemple un interrupteur à commande magnétique, qui commande un relais 22 lorsque la cuve 16 n'occupe pas une position correcte.

A la fig. 7, le détecteur de présence comporte un poussoir 23 traversant un trou de repérage 24 et actionnant un relais mécanique 25 lorsque la cuve 16 se trouve en position convenable.

Il est avantageux de prévoir le détecteur de présence de manière qu'en position de travail il présente un circuit normalement ouvert de façon que l'information transmise par le circuit soit nécessairement une information de bon fonctionnement et qu'une information correspondant à une mauvaise position de la cuve soit analogue à une information de mauvais fonctionnement du circuit.

D'autres types de détecteurs de présence peuvent être mis en œuvre, par exemple des détecteurs à fibres optiques, des détecteurs à cellules photo-électriques, des détecteurs capacitifs, des détecteurs fluidiques, etc.

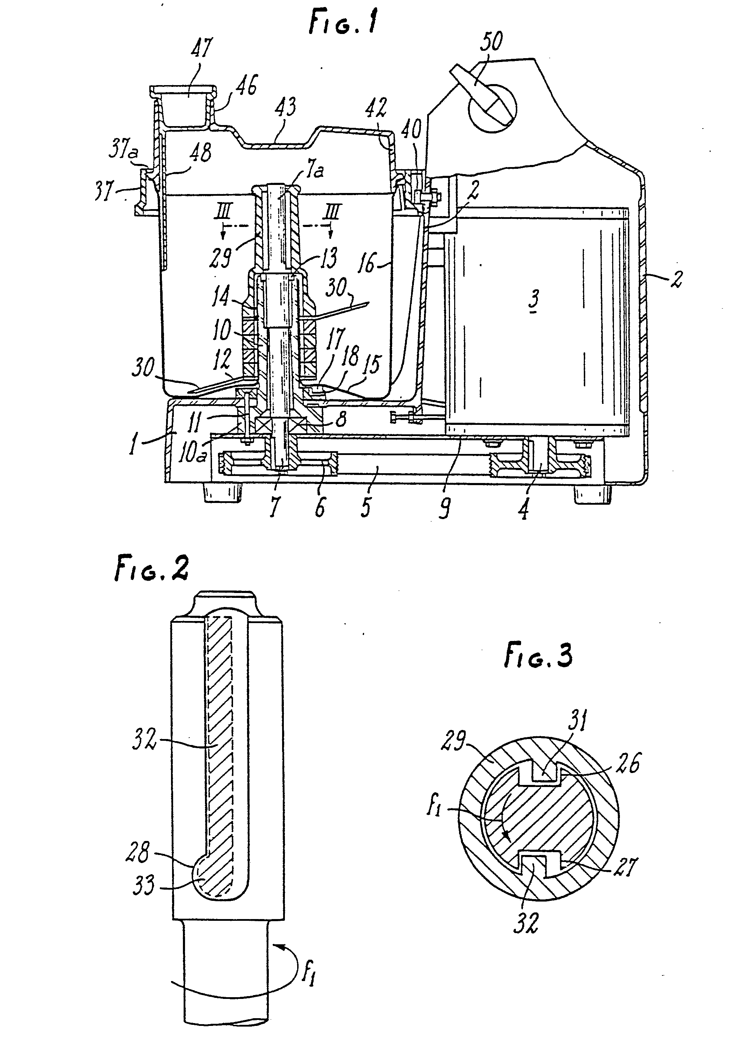

La partie saillante 7a de l'arbre 7 présente des rainures longitudinales 26, 27 dont la partie basse présente un élargissement 28 qui est formé pour s'étendre dans le sens opposé à celui du sens de rotation figuré par la flèche f1 (fig. 2 et 3).

La partie 7a de l'arbre est emmanchée dans un fourreau 29 (fig. 1 et 3) qui porte des couteaux 30. Les couteaux 30 sont avantageusement légèrement pliés, comme représenté à la fig. 1, et de plus ils peuvent être galbés pour présenter un pas, le pas de deux couteaux consécutifs étant avantageusement opposé. Les couteaux peuvent être remplacés par d'autres outils, par exemple des aubes mélangeuses.

La partie supérieure du fourreau 29 qui correspond à la partie saillante 7a de l'arbre 7 porte des barrettes internes 31, 32 présentant, comme illustré par la fig. 2, un renflement 33 destiné à être introduit dans l'élargissement 28 correspondant. La largeur de chaque renflement 33 est toutefois légèrement inférieure à la largeur des rainures longitudinales 26, 27 pour que lesdits renflements puissent coulisser dans lesdites rainures.

Comme cela ressort de ce qui précède, lorsque l'arbre 7 est entraîné dans le sens de la flèche f1, son mouvement est transmis au fourreau 29 par les barrettes 31, 32. Les couteaux portés par le fourreau 29 étant nécessairement freinés dans le mouvement dans lequel ils sont entraînés, il s'ensuit que les renflements 33 sont maintenus dans le fond des élargissements 28 en empêchant par suite des mouvements ascendants des couteaux pendant leur rotation.

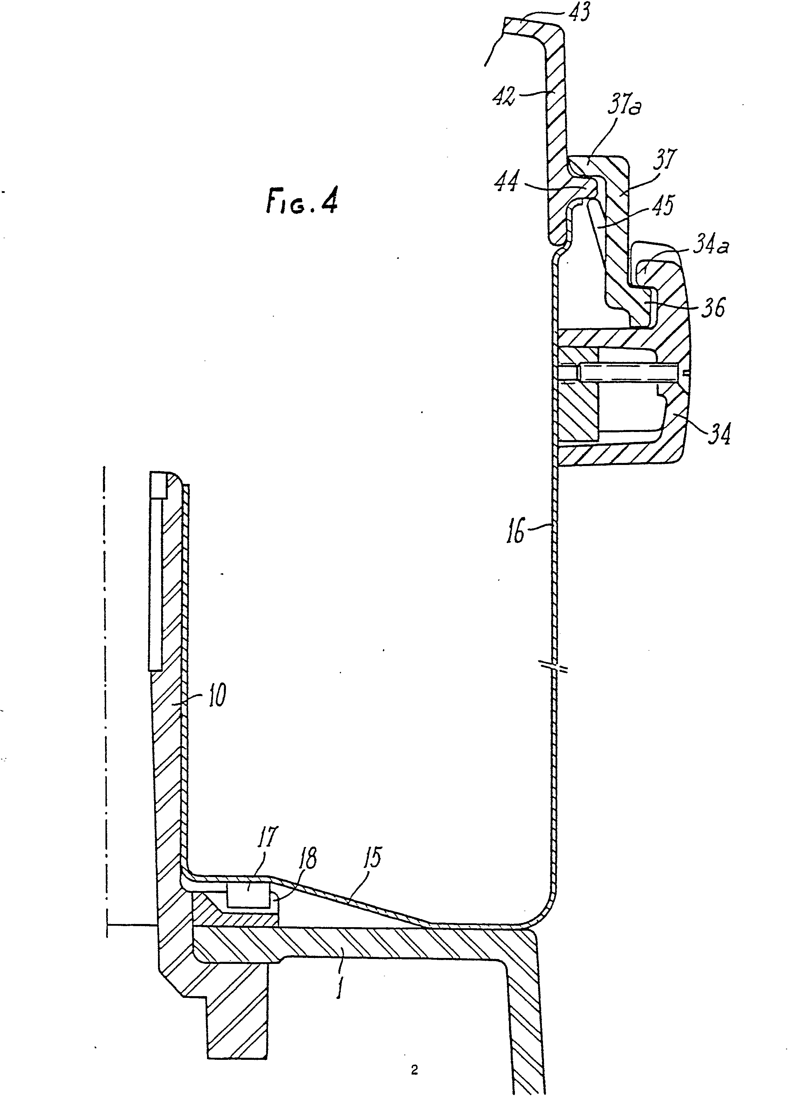

La cuve 16 présente latéralement des poignées 34, 35 (fig. 4 et 5) qui sont destinées à permettre sa mise en place et son retrait ; de plus, les poignées 35 présentent des segments rabattus 34a, 35a qui sont destinés à coopérer avec un rebord périphérique 36 d'une couronne 37. Le rebord 36 présente des découpes 38 de largeur légèrement supérieure aux segments 34a, 35a pour permettre d'amener le rebord 36 en dessous des segments 34a, 35a. Le rebord 36 présente une troisième découpe 39 pour le passage d'un doigt 40 porté par le carter 2 et destiné à coopérer avec une butée 41 de la couronne 37.

La couronne 37 est enfilée sur le bord tombé 42 d'un couvercle 43. Le bord tombé 42 forme une collerette périphérique 44 pour un rebord 37a de la couronne 37.

La collerette 44 et le rebord 37a sont conformés pour présenter, entre eux, une faible friction afin que le couvercle 42 puisse être tourné facilement par rapport à la couronne 37. Pour empêcher que la couronne 37 puisse être déplacée verticalement par rapport au couvercle et puisse en être séparée, la couronne 37 est munie d'éléments de retenue 45. Les éléments de retenue 45 peuvent être constitués de plusieurs manières différentes par exemple, comme représenté à la fig. 4, par des pattes déformables qui permettent un encliquetage de la couronne sur le couvercle par déformation temporaire des pattes. Les organes 45 pourraient être aussi constitués par des doigts traversant la couronne 37 et saillant en dessous de la collerette 44. D'autres moyens connus dans la technique et produisant le même effet pourraient être employés.

Il est avantageux que le couvercle 43 soit fabriqué en matière moulée et de préférence en une matière transparente pour permettre à l'utilisateur de contrôler le travail à l'intérieur de la cuve 16.

Les fig. 1 et 5 montrent que le couvercle 43 est conformé pour délimiter une embase tubulaire 46 qui est formée au voisinage immédiat de son bord tombé 42. L'embase tubulaire 46 sert à la mise en place d'un bouchon 47 à partir du fond duquel fait saillie une lame racleuse 48. La lame racleuse 48 s'étend vers le bas au moins jusqu'au niveau du couteau 30 le plus haut.

Outre ce qui précède, la couronne 37 comporte, par exemple, au niveau de la butée 41, un détecteur de position 49 qui peut être constitué de nombreuses façons différentes et par exemple comme décrit ci-dessus en référence au détecteur de présence 19. Le détecteur de position 49 de même que le détecteur de présence 19 sont disposés pour que leurs circuits soient en série de sorte que des défauts de position de la cuve et tout défaut de position de la couronne 37, par rapport à la cuve, empêchent le fonctionnement de l'ensemble moteur 3 ; on est assuré de cette façon que la cuve est toujours bien en place et que le couvercle est aussi en place lorsque les couteaux sont entraînés.

L'ensemble moteur réducteur 3 est commandé à partir d'un commutateur 50 à plusieurs positions pour que l'entraînement des couteaux soit progressif de même que le ralentissement. Cela peut être réalisé de nombreuses façons connues dans la technique, par exemple en déplaçant le commutateur 50 pour l'amener successivement dans des positions pour lesquelles la vitesse de l'arbre de sortie 4 est différente ou en lui faisant commander un potentiomètre ou un thyristor.

Les détecteurs de position et de présence décrits ci-dessus empêchent que la manœuvre du commutateur 50 ait un effet quelconque lorsque la cuve n'est pas en place ou lorsque le couvercle n'est pas lui-même en place et que la couronne qui le retient n'occupe pas une position déterminée. De cette façon il n'existe aucun risque pour un opérateur à retirer le fourreau 29 portant les couteaux puis à retirer la cuve pour procéder à un nettoyage.

De même aucun accident ne peut se produire au cours de la mise en place du fourreau portant les couteaux et pendant le travail des aliments dans la cuve, par exemple, pendant le hachage de viandes ou légumes. Si les matières alimentaires hachées tendent à s'agglomérer sur la paroi interne de la cuve, il suffit à l'opérateur de faire tourner le couvercle en utilisant l'embase 46 comme une poignée de sorte que la lame racleuse 48 détache les produits adhérant à la paroi interne de la cuve.

L'invention n'est pas limitée à l'exemple de réalisation représenté et décrit en détail car diverses modifications peuvent lui être apportées sans sortir de son cadre.

En particulier l'ensemble moteur 3 peut être disposé directement en dessous de la cuve 16. De même il peut être prévu plusieurs jeux de couteaux selon la nature du travail à effectuer. En outre le bouchon 47 peut permettre l'introduction d'ingrédients divers au fur et à mesure du travail de la machine.

### Revendications

1. Machine de travail pour la préparation d'aliments et d'autres produits en particulier pour hacher et mélanger, comprenant un ensemble moteur d'entraînement de couteaux (3, 4, 5, 6) disposés de façon amovible dans une cuve (16) amovible également, cette cuve étant munie d'au moins un doigt (17) coopérant avec au moins un élément d'arrêt (18) imposant une position déterminée de la cuve par rapport au socle, un mécanisme détecteur (19) ·de présence réagissant selon que la cuve occupe ou non ladite position déterminée par rapport au socle, la cuve (16) étant fermée par un couvercle amovible (43) comportant une collerette périphérique adjacente à un rebord tombé (42), ce dernier coopérant avec le bord supérieur de la cuve, un organe assurant la liaison entre la cuve et le couvercle, un détecteur de position (49) étant prévu, réagissant selon que le couvercle occupe ou non une position déterminée par rapport à la cuve, détecteur de présence (19) et détecteur de position (49) agissant en série de sorte que des défauts de position de la cuve et des défauts de position du couvercle empêchent le fonctionnement de l'ensemble moteur, caractérisée en ce que l'organe assurant la liaison entre la cuve et le couvercle est constitué par une couronne de verrouillage (37) formant un élément séparé du couvercle (43) et de la cuve (16), ladite couronne (37) comportant le détecteur de position (49) portant, pour assurer le verrouillage, d'une part, sur la collerette périphérique du couvercle (43) et, d'autre part, sur des éléments solidaires de la cuve, la collerette comportant en outre des éléments de retenue empêchant tout mouvement axial dudit couvercle (43) tout en laissant libre ledit couvercle de tourner.

2. Machine suivant la revendication 1, caractérisée en ce que le couvercle (43) est muni d'au moins une lame racleuse (48) s'étendant à l'intérieur de la cuve (16) contre la paroi interne de celle-ci, cette lame (48) étant formée dans le prolongement d'un bouchon (47) de fermeture d'une embase (46) que présente le couvercle (43) pour former la poignée de manœuvre.

3. Machine suivant la revendication 1, caractérisée en ce qu'un fourreau porte-outil (29) est relié à une partie saillante de l'arbre (7) par un assemblage à rainures (26, 27) et barrettes (31, 32), ces barrettes comportant à leur extrémité basse un renflement (33) destiné à être introduit dans un élargissement (28) des rainures lors de la rotation de l'arbre (7).

4. Machine suivant la revendication 1, caractérisée en ce que le moteur d'entraînement (3) de l'arbre (7) est actionné par un commutateur (50) et au moins un variateur de vitesse de façon que les couteaux (30) soient accélérés puis ralentis progressivement.

### Claims

1. Processing machine for preparing foodstuffs and other products in particular for mincing and mixing, comprising a driving motor assembly (3, 4, 5, 6) for cutters removably mounted within a tank (16) also removable, this tank being provided with at least one finger (17) cooperating with at least one stopping member (18) commanding a predetermined position of the tank with respect to the stand, a presence detector means (19) reacting according to whether the tank occupies or not said predetermined position with respect to the stand, the tank (16) being closed by a removable cover (43) comprising a peripheral collar adjacent a bent edge (42), the latter cooperating the upper edge of the tank, a member permitting the connection between the tank and the cover, a position detector (49) being provided, reacting according to whether the cover occupies or not a predetermined position with respect to the tank, presence detector (19) and position detector (49) acting in series so that position defects of the tank and position defects of the cover prevent working of the motor assembly, characterized in that the member permitting the connection, between the tank and the cover is made by a locking ring (37) forming a member separated from the cover (43) and the tank (16), said ring (37) forming a member separated from the cover (43) and the tank (16), said ring (37) comprising the position detector (49) bearing, for permitting the locking, on the one hand, on the peripheral collar of the cover (43) and, on the other hand, on members integral with a tank, the collar further comprising retaining elements preventing any axial movement of said cover (43) while letting the cover free to rotate.

2. Machine according to claim 1, characterized in that the cover (43) is provided with at least one scrapping blade (48) extending inside the tank (16) against the inner wall of the same, this blade (48) being formed in the prolongation of a closing plug (47) of a base (46) that has the cover (43) for forming the operating handle.

3. Machine according to claim 1, characterized in that a tool-holding sheath (29) is connected to a protruding portion of the shaft (7) via a joint with grooves (26, 27) and small bars (31, 32), these small bars having at their lower end a boss (33) adapted to fit into a widening (28) of the grooves during rotation of the shaft (7).

4. Machine according to claim 1, characterized in that the driving motor (3) of the shaft (7) is operated by a switch (50) and at least one speed variator so that the cutters (30) may be accelerated then progressively slowed down.

**Patentansprüche**

1. Maschine zum Behandeln von Nahrungsmitteln und anderen Produkten, insbesondere zum Zerkleinern und Mengen, die eine motorische Antriebseinrichtung für abwechselbare Messer (3, 4, 5, 6) umfasst, welche in einem auswechselbaren, böttichartigen Behälter (16) angeordnet ist, wobei dieser Behälter mindestens einen Finger (17) aufweist, der mit mindestens einem Sperrelement (18) zusammenwirkt, damit der Behälter eine vorbestimmte Stellung in bezug auf seine Unterlage einnimmt, wobei eine Einrichtung (19) für die Anwesenheit verschiedentlich zurückwirkt, je nachdem der Behälter die vorhererwähnte Stellung in bezug auf seine Unterlage einnimmt oder nicht, und der Behälter (16) durch einen abnehmbaren, mit einer sich an einen nach unten gerichteten Wandteil (42) anschliessenden Umfangsrippe versehenen Deckel (43) verschlossen ist, wobei dieser Wandteil mit dem oberen Rand des Behälters zusammenwirkt und die Verbindung zwischen Behälter und Deckel durch ein Verbindungsorgan sichergestellt wird, wobei eine Anzeigeeinrichtung (49) verschiedentlich zurückwirkt, je nachdem der Deckel eine vorbestimmte Stellung in bezug auf den Behälter einnimmt oder nicht, und die Einrichtung für die Anwesenheit (19) und die Anzeigeeinrichtung für die Stellung (49) derart in Serie liegen, dass jede fehlerhafte Stellung des Behälters oder des Deckels jedes Funktionieren der motorischen Antriebseinrichtung verhindert, dadurch gekennzeichnet, dass das Verbindungsorgan, das die Verbindung zwischen Behälter und Deckel sicherstellt, durch eine kronenartige Verriegelung (37) gebildet ist, die ein vom Deckel (43) und vom Behälter (16) getrenntes Element darstellt, wobei diese kronenartige Verriegelung (37), die die Anzeigeeinrichtung (49) für die Stellung enthält, die sich zur Sicherstellung der Verriegelung einerseits auf der Umfangsrippe des Deckels (43) und andererseits auf den mit dem Behälter festgebundenen Elementen abstützt, wobei die Umfangsrippe noch Halterungselemente aufweist, die jede axiale Bewegung des Deckels (43) verhindern, der sich trotzdem drehen kann.

2. Maschine nach Anschluss 1, dadurch gekennzeichnet, dass der Deckel (43) mit wenigstens einem lamellenartigen Schabeelement (48) versehen ist, das sich in das Innere des Behälters (16) sowie gegen seine Innenwand erstreckt, wobei dies Element (48) in der Verlängerung eines Verschlussstöpsels (47) angeformt ist, der in einem als Handgriff zum Schliessen des Deckels (43) dienenden Sockel (46) sitzt.

3. Maschine nach Anspruch 1, dadurch gekennzeichnet, dass eine das Werkzeug tragende Hülse (29) mit einem vorspringenden Teil einer Welle (7) mit Hilfe von Nuten (26, 27) und Vorsprüngen bzw. Rippen (31, 32) verbunden ist, und dass diese Rippen (31, 32) an ihrem unteren Ende einen Wulst (33) aufweisen, der dazu bestimmt ist, in eine verbreiterte Stelle (28) der Nuten bei Drehung der Welle (7).

4. Maschine nach Anspruch 1, dadurch gekennzeichnet, dass die motorische Antriebseinrichtung (3) der Welle (7) durch einen Schalter (50) betätigt wird und wenigstens einen Geschwindigkeitsregler aufweist, mit dessen Hilfe die Messer (30) zunächst stärker und dann weniger stark beschleunigt werden.

0 076 712

Fig. 1

Fig. 2

Fig. 3

# Fig. 4

Fig.5

Fig.6

Fig.7